# FASCICULE DE BREVET EUROPEEN

(11) **EP 3 000 635 B1**
(45) Date de publication et mention de la délivrance du brevet: **21.06.2017**
(21) Numéro de dépôt: 15186332.1
(22) Date de dépôt: 22.09.2015
(51) Int. Cl.: B60H 1/22, F24H 1/00

(54) **DISPOSITIF DE CONDITIONNEMENT THERMIQUE DE FLUIDE POUR VÉHICULE AUTOMOBILE ET APPAREIL DE CHAUFFAGE ET/OU DE CLIMATISATION CORRESPONDANT**
VORRICHTUNG ZUR FLUIDWÄRMEKONDITIONIERUNG FÜR KRAFTFAHRZEUG, UND ENTSPRECHENDES HEIZ- UND/ODER KLIMATISIERUNGSGERÄT
DEVICE FOR THERMAL CONDITIONING OF A FLUID FOR A MOTOR VEHICLE AND CORRESPONDING HEATING AND/OR AIR-CONDITIONING DEVICE

(30) Priorité: 26.09.2014 FR 1459156
(43) Date de publication de la demande: 30.03.2016
(73) Titulaire: VALEO SYSTEMES THERMIQUES, 78320 Le Mesnil Saint-Denis (FR)
(72) Inventeur: LEBORGNE, José C/o Valeo Systèmes Thermiques, 78322 Le Mesnil Saint-Denis cédex (FR); PIERRON, Frédéric C/o Valeo Systèmes Thermiques, 78322 Le Mesnil Saint-Denis cédex (FR); TELLIER, Laurent C/o Valeo Systèmes Thermiques, 78322 Le Mesnil Saint-Denis cédex (FR); MA, Zhenxia C/o Valeo Systèmes Thermiques, 78322 Le Mesnil Saint-Denis cédex (FR)
(74) Mandataire: Metz, Gaëlle

(56) Documents cités:
- DE-A1-102010 060 446
- FR-A1- 2 979 692
- FR-A1- 2 979 693
- FR-A1- 2 988 818
- FR-A1- 2 996 299
- US-A1- 2014 086 566

## Description

L'invention concerne un dispositif de conditionnement thermique de fluide, tel qu'un dispositif de chauffage électrique de fluide pour véhicule automobile. L'invention s'applique plus particulièrement aux appareils de chauffage et/ou de climatisation de véhicules automobiles comportant un tel dispositif de chauffage.

De façon habituelle, le réchauffage de l'air destiné au chauffage de l'habitacle est assuré par le passage d'un flux d'air à travers un échangeur thermique, plus précisément par un échange thermique entre le flux d'air et un fluide. Il s'agit généralement du fluide de refroidissement dans le cas d'un moteur thermique.

Un tel mode de chauffage peut s'avérer inadapté ou insuffisant pour garantir un chauffage de l'habitacle d'un véhicule automobile, ainsi qu'un désembuage et un dégivrage.

Toutefois, un mode de chauffage rapide et efficace de l'habitacle du véhicule, en particulier pour assurer un réchauffement de l'habitacle ou de dégivrage ou de désembuage du véhicule avant utilisation en environnement très froid ou encore lorsqu'une montée très rapide de la température est souhaitée.

En outre, dans le cas d'un véhicule électrique, la fonction de chauffage n'est plus réalisée par la circulation du fluide de refroidissement dans l'échangeur thermique. On peut cependant prévoir un circuit d'eau pour le chauffage de l'habitacle mais ce mode de chauffage peut aussi s'avérer inadapté ou insuffisant pour garantir un chauffage rapide et efficace de l'habitacle du véhicule.

Par ailleurs, afin de réduire l'encombrement et le coût d'un circuit d'eau supplémentaire, il est également connu d'utiliser pour le véhicule électrique, une boucle de climatisation fonctionnant en mode pompe à chaleur. Ainsi, la boucle de climatisation permettant classiquement de refroidir un flux d'air à l'aide d'un fluide réfrigérant est dans ce cas, utilisée de façon à réchauffer le flux d'air. Il convient pour ce faire d'utiliser un évaporateur de la boucle de climatisation comme un condenseur.

Toutefois, ce mode de chauffage aussi peut s'avérer inadapté ou insuffisant. En effet, les performances de la boucle de climatisation en mode pompe à chaleur dépendent des conditions climatiques extérieures. Par exemple, lorsqu'une température d'air extérieur est trop basse, cet air ne peut pas être utilisé comme source d'énergie thermique.

Une solution connue consiste à adjoindre à l'échangeur thermique ou au circuit d'eau ou encore à la boucle de climatisation, un dispositif de chauffage électrique additionnel.

Le dispositif de chauffage électrique additionnel peut être adapté pour chauffer en amont le fluide, tel que le fluide de refroidissement pour le moteur thermique, ou l'eau du circuit d'eau de chauffage de l'habitacle du véhicule électrique ou encore le fluide réfrigérant de la boucle de climatisation.

De façon connue, le dispositif de chauffage électrique additionnel comporte un ou plusieurs modules de chauffe en contact avec le fluide à chauffer.

Plus précisément, un module de chauffe comporte par exemple un noyau et un élément chauffant réalisé sous la forme d'une enveloppe cylindrique entourant le noyau, afin de définir un circuit de guidage du fluide entre le noyau et l'enveloppe cylindrique. L'enveloppe cylindrique est donc la source d'énergie thermique.

Selon une solution connue, un élément chauffant présente des moyens électriques de chauffe par exemple, une ou des résistances chauffantes réalisées par sérigraphie sous forme de pistes résistives sur la surface externe de l'élément chauffant.

Toutefois, une circulation axiale du fluide dans le circuit de guidage entre le noyau et l'enveloppe cylindrique, diminue le transfert thermique entre l'enveloppe cylindrique et le fluide.

Afin d'augmenter le rendement de l'échange thermique entre l'élément chauffant et le fluide circulant entre le noyau et l'élément chauffant, il est donc préférable d'éviter une circulation du fluide parallèle à l'axe de l'élément chauffant sous forme d'enveloppe cylindrique.

Une solution connue est de générer un mouvement hélicoïdal du fluide circulant dans le circuit de guidage. On augmente ainsi l'échange thermique entre l'élément chauffant par exemple sous forme d'enveloppe cylindrique et le fluide circulant à l'intérieur de cette enveloppe cylindrique.

Pour ce faire, il a été proposé que le noyau présente sur sa surface externe une rainure sensiblement hélicoïdale. Un tel noyau est donc de réalisation complexe.

Cette rainure hélicoïdale permet de forcer le tournoiement du fluide. Toutefois, avec une telle solution il a été constaté un manque d'homogénéité de vitesses à l'entrée du circuit de guidage du fluide et une perte de charge élevée.

Dans le document FR 2 996 299 au nom de la Demanderesse, il a été proposé un dispositif de conditionnement thermique d'un fluide pour véhicule automobile dans lequel le canal d'entrée du fluide présente au moins une portion sensiblement courbe conformée pour générer un mouvement de tournoiement du fluide.

Ainsi, on peut créer "naturellement" un tournoiement du fluide, juste avant l'arrivée du fluide dans le circuit de guidage.

Le mouvement de tournoiement du fluide se poursuit dans le circuit de guidage tout au long du noyau de façon à améliorer le transfert thermique entre le fluide et l'enveloppe entourant le noyau.

Dans le cas d'un dispositif de chauffage, le dispositif cède au fluide un maximum d'énergie thermique produite par l'enveloppe par exemple cylindrique, mais le système s'applique aussi bien pour enlever de la chaleur au fluide. Dans ce dernier cas, il faut prévoir une enveloppe refroidie, par exemple par l'intermédiaire d'un circuit frigorigène prévu à cet effet.

Cependant, lorsqu'on allonge les enveloppes ou cylindres de guidage et de chauffage, on constate que ce mouvement de tournoiement ne peut plus être conservé tout au long du noyau jusqu'à la sortie, de sorte que l'on observe à nouveau un écoulement au moins partiellement axial du fluide et une diminution de l'efficacité de transfert thermique qui n'est plus optimale tout au long du noyau.

La présente invention vise à proposer un dispositif de chauffage amélioré permettant de pallier au moins partiellement aux inconvénients précités.

A cet effet, l'invention a pour objet un dispositif de conditionnement thermique d'un fluide pour véhicule automobile, comprenant au moins un module thermique comprenant un tube chauffant à l'intérieur duquel un fluide à chauffer ou à refroidir peut s'écouler d'une extrémité à l'autre extrémité, caractérisé en ce qu'il comprend un élément mobile à pales radiales apte à être entraîné en rotation, ledit élément mobile à pales radiales s'étendant au moins partiellement entres les deux extrémités du tube chauffant.

Ainsi, par la présence de l'élément mobile sur tout ou partie de la longeur du tube chauffant, un effet de tournoiement poussant le fluide au contact de la paroi intérieur du tube chauffant peut être assuré sur toute la longueur du tube chauffant, ce qui permet un meilleur transfert thermique et une plus grande efficacité du dispositif, notamment pour de grandes longueurs de tube chauffants, en particulier au-delà d'environ 45mm.

Selon un mode de réalisation particulier, l'élément mobile à pales radiales s'étend entre les deux extrémités du tube chauffant.

Selon une alternative de réalisation, l'élément mobile à pales radiales s'étend partiellement entre les deux extrémités du tube chauffant.

Le dispositif peut en outre comporter un ou plusieurs des aspects suivants, pris séparément ou en combinaison :
Selon un aspect, les pales radiales de l'élément mobile sont au moins en partie courbées axialement, notamment sur une portion proximale de l'extrémité d'entrée du fluide et droites sur le reste de leur longueur.

Ladite portion proximale peut s'étendre environ sur un tiers de la longueur de l'élément mobile à pales radiales.

Selon un autre aspect le dispositif comporte un noyau formant palier pour ledit élément mobile à pales radiales.

Selon encore un autre aspect, l'élément mobile à pales radiales comprend un axe de support pointu aux extrémités, chaque extrémité étant maintenue dans un palier associé, disposé respectivement dans un boîtier d'entrée de fluide et un boîtier de sortie de fluide.

Par ailleurs ledit élément mobile à pales radiales peut comporter en outre au niveau de l'extrémité d'entrée de fluide une jupe radiale pour permettre à l'élément mobile à pales radiales d'être soulevé en fonctionnement pour diminuer les forces de frottement.

Selon une variante, on prévoit en outre un moteur électrique apte à être entraîné ledit élément mobile à pales radiales.

Selon une autre variante, le dispositif comprend en outre un boîtier d'entrée de fluide et un boîtier de sortie de fluide, le boîtier d'entrée présentant au moins un canal d'entrée du fluide communiquant avec l'intérieur du tube chauffant, et le canal d'entrée du fluide présente au moins une portion sensiblement courbe conformée pour générer un mouvement de tournoiement du fluide entraînant ledit élément mobile à pales radiales en rotation.

Le dispositif tel que défini ci-dessus est par exemple agencé dans un circuit de chauffage de l'habitacle dudit véhicule.

L'invention concerne également un appareil de chauffage et/ou climatisation pour véhicule automobile, caractérisé en ce qu'il comporte un dispositif de chauffage électrique tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente une vue en perspective d'un dispositif de chauffage électrique de fluide pour véhicule automobile selon la présente invention, avec des arrachements,
- la figure 2 représente la partie inférieure du dispositif de chauffage électrique de la figure 1 représenté en plein auquel on a ôté un boîtier de sortie de fluide,

- la figure 3 est une vue de dessous et ouvert du boîtier d'entrée de fluide selon un mode de réalisation,
- la figure 4 est une vue schématique en coupe longitudinale d'un dispositif de chauffage électrique des figures 1 à 3,
- la figure 5A est une vue en perspective conique d'un noyau équipé d'un élément mobile à pales radiales selon un second mode de réalisation,
- la figure 5B est une vue en perspective conique du noyau de la figure 5A,
- la figure 5C est une vue en coupe longitudinale, selon l'axe, de la partie d'admission de fluide du noyau
- la figure 5D est une vue en perspective de l'élément mobile à pales radiales de la figure 5A,
- la figure 6 est une vue en perspective de l'élément mobile à pales radiales selon un troisième mode de réalisation,
- la figure 7 est une vue en perspective de l'élément mobile à pales radiales selon un quatrième mode de réalisation,
- la figure 8 est une vue en perspective éclatée d'un noyau équipé d'un élément mobile à pales radiales de la figure 7.

Dans ces figures, les éléments sensiblement identiques portent les mêmes références.

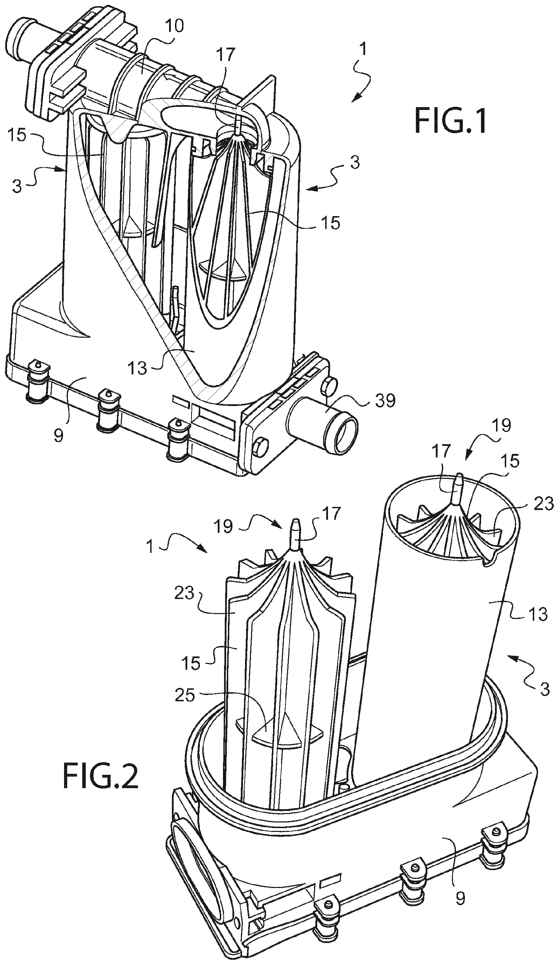

La figure 1 représente un dispositif de conditionnement thermique tel qu'un dispositif de chauffage électrique de fluide pour véhicule automobile 1 pour un appareil de chauffage et/ou climatisation.

Le dispositif de chauffage électrique 1 est par exemple un dispositif de chauffage additionnel permettant de chauffer d'un fluide avant son entrée dans un circuit de chauffage d'un fluide pour le chauffage de l'habitacle d'un véhicule électrique.

Selon un autre exemple, le dispositif de chauffage électrique 1 est disposé en amont d'un évaporateur d'une boucle de climatisation apte à fonctionner en mode pompe à chaleur, de façon à chauffer le fluide réfrigérant.

Selon encore un autre exemple, le dispositif de chauffage électrique 1 est agencé en amont d'un échangeur thermique utilisant le fluide de refroidissement d'un moteur thermique comme fluide caloporteur.

On pourrait aussi prévoir un tel dispositif de chauffage électrique 1 en amont d'un échangeur thermique destiné à la régulation thermique d'un dispositif de stockage de l'énergie électrique, parfois qualifié d'ensemble de batteries, pour un véhicule à propulsion électrique ou hybride.

L'invention peut aussi s'appliquer à un dispositif permettant de refroidir un fluide.

Le dispositif de conditionnement thermique tel qu'un dispositif de chauffage électrique 1 représenté comprend :
- un premier module de chauffe et un deuxième module de chauffe désignés tous les deux par la référence 3,
- un moyen de commande (non visible sur les figures) pour contrôler l'alimentation électrique des modules de chauffe 3,
- une entrée de fluide, telle qu'un boîtier d'entrée de fluide 9, et
- une sortie de fluide, telle qu'un boîtier de sortie de fluide 10.

Bien entendu on peut prévoir que le dispositif de chauffage électrique comprenne un seul module de chauffe, ou plus de deux modules de chauffe selon les besoins.

En se référant aux figures 1 à 4, un module de chauffe 3 comprend un élément chauffant 13.

Selon l'exemple illustré, un élément chauffant 13 est réalisé sous la forme d'un tube chauffant cylindrique à l'intérieur duquel circule le fluide à réchauffer ou à refroidir.

Chaque tube chauffant 13 présente par exemple au moins un moyen électrique de chauffe tel qu'une résistance chauffante réalisée par sérigraphie sous la forme d'une piste résistive sur l'extérieur du tube cylindrique (non représenté sur les figures) comme cela a été décrit dans le document FR 2 996 299 au nom de la demanderesse.

Ainsi, la chaleur produite par la résistance est directement transmise au fluide à chauffer à travers la paroi du tube chauffant 13 correspondant, ce qui minimise les pertes thermiques et réduit l'inertie thermique du dispositif, le fluide peut dès lors être chauffé rapidement.

Le dispositif de chauffage électrique 1 d'un fluide pour véhicule automobile comprend en outre à l'intérieur de chaque tube chauffant 13 un élément mobile à pales radiales 15 apte à être entraîné en rotation lors de son fonctionnement.

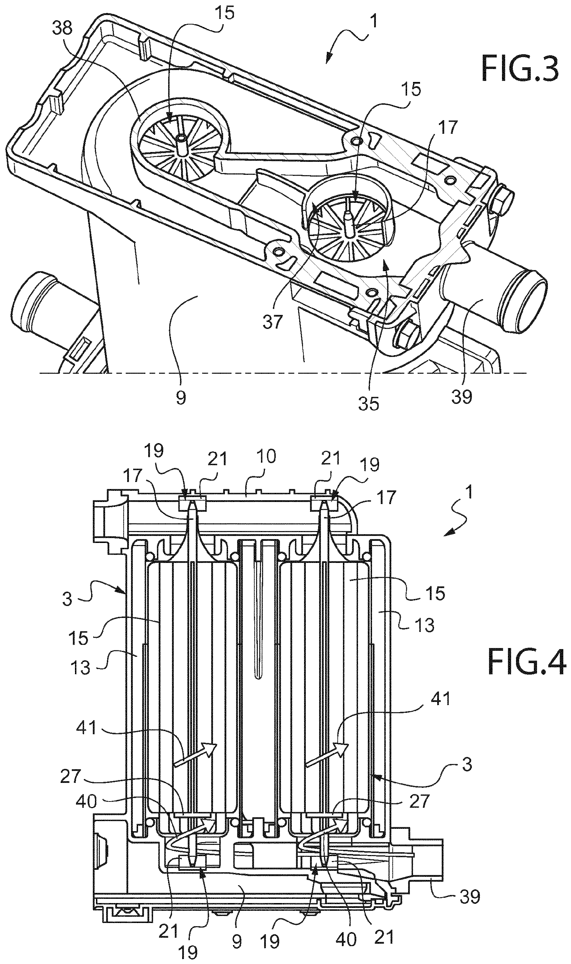

Comme on le voit mieux sur la figure 4, chaque élément mobile à pales radiales 15 s'étend entres les deux extrémités du tube chauffant 13 associé.

Conformément à l'invention, l'élément mobile à pales radiales 15 peut s'étendre sur tout ou partie de la longueur du tube chauffant.

Ainsi selon un mode de réalisation particulier, l'élément mobile à pales radiales 15 s'étend sur toute la longueur du tube chauffant, entre les deux extrémités dudit tube.

Selon une alternative de réalisation, l'élément mobile à pales radiales 15 s'étend sur seulement une partie de la hauteur du tube chauffant 13. Selon ce mode de réalisation, l'élément mobile peut être positionné au niveau d'une des extrémités du tube chauffant ou à distance des extrémités du tube chauffant.

En référence à la figure 2, un élément mobile 15 comprend un axe central 17 sous forme de tige dont les extrémités se terminent chacune par exemple par une pointe 19 qui se loge dans des paliers de support 21 associés, disposés respectivement dans le boitier d'entrée de fluide 9 et dans le boîtier de sortie de fluide 10 (voir figure 4).

Selon le mode de réalisation montré sur les figures 1 à 4, chaque élément mobile 15 comprend des pales 23 (voir notamment figure 2) réalisées par exemple sous forme de parois radiales, par exemple au nombre de douze, partant de l'axe 17 et réalisées d'une seule pièce avec celle-ci, par exemple par moulage par injection. Les pales radiales 23 s'étendent dans ce mode de réalisation dans des plans incluant l'axe de rotation 17 de l'élément mobile.

Un disque de renforcement 25, perpendiculaire à l'axe 17 et reliant deux à deux les pales radiales 23 peut être prévu par exemple, à mi-hauteur de l'élément mobile 15. Dans ce cas, le diamètre du disque de renforcement 25 est bien inférieur au diamètre de l'élément mobile à pales radiales 15 pour ne pas induire une parte de charge inutile pour le fluide à réchauffer ou à refroidir.

Comme on peut le voir sur la figure 4, l'élément mobile à pales radiales 15 comporte en outre au niveau de l'extrémité d'entrée de fluide une jupe radiale 27 ici sous forme d'un disque perpendiculaire à l'axe 17 pour permettre à l'élément mobile à pales radiales 15 d'être soulevé en fonctionnement par le fluide injecté pour diminuer les forces de frottement.

Pour l'entrée en rotation des éléments mobiles à pales radiales 15, le boîtier d'entrée de fluide 9 est adapté pour générer à l'entrée des tubes chauffants 13 des flux tournoyants qui entraînent ainsi les éléments mobiles à pales radiales 15 en rotation.

Il s'agit là d'une manière passive d'entraînement qui est peu couteuse. Une fois entraîné en rotation, l'élément mobile à pales 15 permet de transmettre ce mouvement de rotation au fluide à chauffer ou à refroidir jusqu'à la boîte de sortie 10 du fluide, donc sur toute la longueur du tube chauffant 13.

Ce résultat est obtenu que l'élément mobile à pales radiales s'étende ou non sur toute la longueur du tube chauffant.

Par le tournoiement, le fluide à réchauffer ou à refroidir est constamment poussé par la force centrifuge contre la surface interne des tubes chauffants 13.

Le fluide suit donc un mouvement, par exemple ascendant à l'intérieur des tubes chauffants 13, en conservant grâce aux éléments mobiles à pales radiales 15 le tournoiement généré en amont, et donc suit un mouvement sensiblement hélicoïdal sur toute la longueur des tubes chauffants 13 permettant ainsi d'augmenter le transfert thermique entre l'élément chauffant 13 et le fluide.

En se référant à la figure 3 montrant en partie l'intérieur de la boîte d'entrée de fluide 9, pour générer le tournoiement à l'entrée des tubes chauffants 13, la boîte d'entrée de fluide 9 comprend un canal d'entrée 35 présentant pour chaque tube chauffant 13 une portion par exemple 37 et 38 sensiblement courbe pour générer le tournoiement du fluide.

Plus en détail, le boîtier d'entrée de fluide 9a comporte une tubulure saillante d'admission de fluide 39 qui est centrée par rapport à une ligne reliant les deux axes 17 des éléments mobiles à pales radiales 15.

Au niveau de l'entrée du tube chauffant 13 proximale à la tubulure 39 est disposée une paroi circulaire 37 sur plus de 180° de sorte que lorsque le fluide frappe cette paroi 37, le fluide est entraîné en rotation, entraînant ainsi également l'élément mobile à pales radiales 15 en rotation.

Plus en aval est disposé une seconde paroi circulaire 38 au niveau de l'entrée du tube chauffant 13 distale par rapport à la tubulure 39, cette seconde paroi 38 a également pour fonction de faire tournoyer le fluide à l'entrée du tube chauffant 13 distale.

D'autres possibilités et agencements de parois courbes pour faire tournoyer le fluide à réchauffer ou à refroidir à l'entrée des tubes chauffants sont également décrits dans le document FR 2 996 299.

Sur la figure 4, on a représenté par des flèches 40 l'admission du fluide à réchauffer ou à refroidir qui est mis en rotation pour chacun des tubes chauffants 13, puis par des flèches 41 le vecteur de vitesse du fluide qui est poussé contre la paroi interne des tubes chauffants 13 par la rotation des éléments mobiles à pales radiales 15.

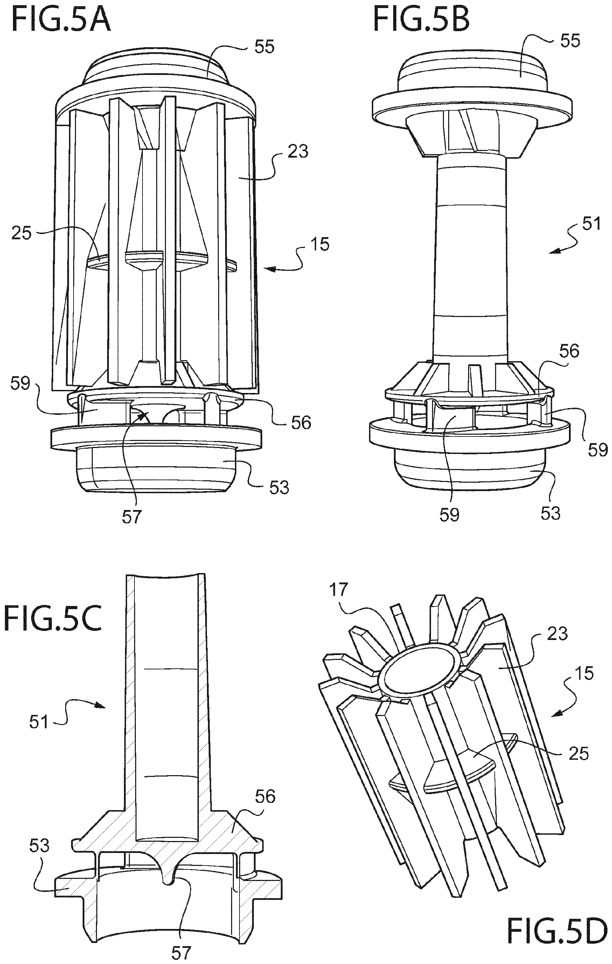

Les figures 5A à 5D montrent un autre mode de réalisation qui diffère de celui des figures 1 à 4 par le fait qu'à l'intérieur des tubes chauffants 13 est installé un noyau 51 avec des joints toriques 53 et 55 aux extrémités (voir figure 5B). Entre le joint torique 53 du bas destiné à être en contact avec le boîtier d'entrée de fluide 9 et le noyau 51 est disposé un guide de tournoiement de fluide composé d'une part d'un disque 56 perpendiculaire à l'axe du noyau avec une protubérance centrale 57 pointant vers le fluide arrivant qui a pour fonction de guider le fluide radialement vers l'extérieur et d'autre part des parois 59 de tournoiement qui impriment au flux venant radialement depuis le centre un mouvement de tournoiement.

L'axe de rotation 17 de l'élément mobile à pales radiales 15 est dans ce mode de réalisation formé lui-même par un tube (voir figure 5D) qui est monté sur le noyau 51 de sorte que ce dernier sert alors de palier pour l'élément mobile à pales 15.

Dans ce mode de réalisation, le tournoiement du fluide à réchauffer ou à refroidir n'est pas créé au niveau de la boîte d'entrée de fluide 9, mais directement à l'entrée des tubes chauffants 13 lors du mouvement ascendant du fluide à chauffer.

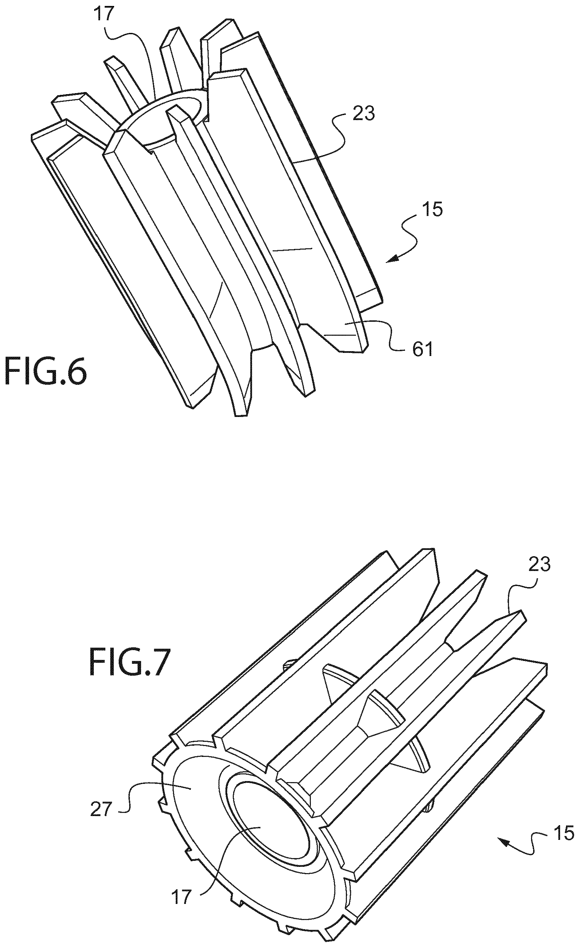

La figure 6 montre une variante de l'élément mobile à pales de la figure 5D.

Selon cette variante les pales radiales sont courbées en partie axialement, par exemple sur une portion proximale 61 de l'extrémité d'entrée du fluide à chauffer ou à refroidir et droites sur le reste de leur longueur. Ainsi, par un effet roue à aube, on favorise, pour la partie basse, l'entraînement des pales radiales par le fluide tournoyant et pour la partie haute, la centrifugation projetant le fluide dans un mouvement de rotation vers l'intérieur du tube chauffant 13.

A titre d'exemple, ladite portion proximale 61 s'étend environ sur un tiers de la longueur de l'élément mobile à pales radiales 15.

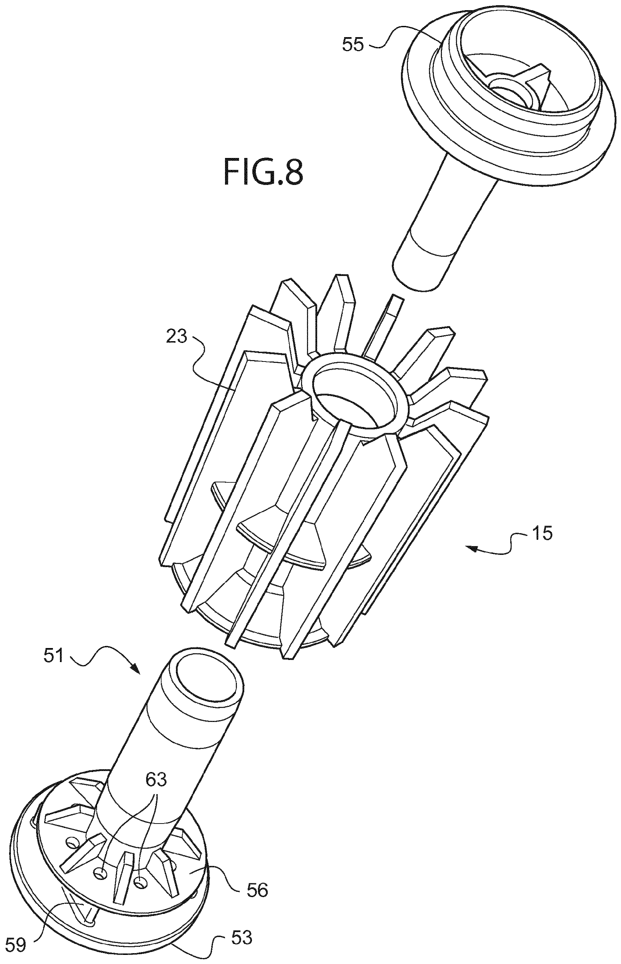

Les figures 7 et 8 montrent encore un autre mode de réalisation de l'élément mobile à pales radiales 15 qui diffère de celui des figures 4A à 4C par le fait que l'élément mobile à pales 15 comporte en outre au niveau de l'extrémité d'entrée de fluide une jupe radiale 27 pour permettre à l'élément mobile à pales radiales d'être soulevé en fonctionnement pour diminuer les forces de frottement.

De plus, le disque 56 comporte à cet effet des orifices 63 axiales laissant passer une partie du fluide à réchauffer ou à refroidir pour soulever légèrement l'élément mobile à pales radiales 15.

Selon un autre mode de réalisation, on peut également prévoir d'équiper le dispositif de conditionnement d'un moteur électrique apte à entraîner ledit élément mobile à pales radiales.

On comprend donc grâce à l'élément mobile à pales radiales 15 entraîné en rotation, par un flux tournoyant entrée ou par un moteur électrique, on peut assurer un chauffage ou un refroidissement homogène du fluide à traiter sur toute la longueur du dispositif de conditionnement 1, même si celui-ci présente une longueur supérieure à 45mm par exemple, notamment supérieur à environ 60mm.

## Revendications

1. Dispositif de conditionnement thermique (1) d'un fluide pour véhicule automobile, comprenant au moins un module thermique (3) comprenant un tube chauffant (13) à l'intérieur duquel un fluide à chauffer ou à refroidir peut s'écouler d'une extrémité à l'autre extrémité, **caractérisé en ce qu'**il comprend un élément mobile à pales radiales (15) apte à être entraîné en rotation, ledit élément mobile à pales radiales (15) s'étendant au moins partiellement entres les deux extrémités du tube chauffant (15).

2. Dispositif selon la revendication 1, **caractérisé en ce que** les pales radiales (23) de l'élément mobile (15) sont au moins en partie courbées axialement.

3. Dispositif selon la revendication 2, **caractérisé en ce que** les pales radiales (23) sont courbées axialement sur une portion proximale (61) de l'extrémité d'entrée du fluide et droites sur le reste de leur longueur.

4. Dispositif selon la revendication 3, **caractérisé en ce que** ladite portion proximale (61) s'étend environ sur un tiers de la longueur de l'élément mobile à pales radiales (15).

5. Dispositif selon l'une quelconque des revendications 1 à 4, **caractérisé en ce qu'**il comporte un noyau (51) formant palier pour ledit élément mobile à pales radiales (15).

6. Dispositif selon l'une quelconque des revendications 1 à 4, **caractérisé en ce que** l'élément mobile à pales radiales (15) comprend un axe de support (17) pointu aux extrémités, chaque extrémité étant maintenue dans un palier associé (21), disposé respectivement dans un boîtier d'entrée de fluide (9) et un boîtier de sortie de fluide (10).

7. Dispositif selon l'une quelconque des revendications 1 à 6, **caractérisé en ce que** ledit élément mobile à pales radiales (15) comporte en outre au niveau de l'extrémité d'entrée de fluide une jupe radiale (27) pour permettre à l'élément mobile à pales radiales (15) d'être soulevé en fonctionnement pour diminuer les forces de frottement.

8. Dispositif selon l'une quelconque des revendications 1 à 7 **caractérisé en ce qu'**il comprend en outre un moteur électrique apte à entraîner ledit élément mobile à pales radiales.

9. Dispositif selon l'une quelconque des revendications 1 à 7 **caractérisé en ce qu'**il comprend en outre un boîtier d'entrée de fluide (9) et un boîtier de sortie de fluide (10), le boîtier d'entrée (9) présentant au moins un canal d'entrée (35) du fluide communiquant avec l'intérieur du tube chauffant (13), et **en ce que** le canal d'entrée (35) du fluide présente au moins une portion sensiblement courbe (37, 38) conformée pour générer un mouvement de tournoiement du fluide entraînant ledit élément mobile à pales radiales (15) en rotation.

10. Circuit de chauffage de l'habitacle d'un véhicule **caractérisé en ce qu'**il comprend un dispositif selon l'une quelconque des revendications précédentes.

11. Appareil de chauffage et/ou climatisation pour véhicule automobile, **caractérisé en ce qu'**il comprend au moins un dispositif de conditionnement thermique (1) selon l'une quelconque des revendications précédentes.

## Patentansprüche

1. Vorrichtung (1) zur thermischen Aufbereitung eines Fluids für ein Kraftfahrzeug, die wenigstens ein Wärmemodul (3) umfasst, das ein Heizrohr (13) enthält, in dem ein zu erhitzendes oder zu kühlendes Fluid von einem zum anderen Ende strömen kann, **dadurch gekennzeichnet, dass** sie ein bewegliches Element (15) mit radialen Schaufeln umfasst, das rotatorisch angetrieben werden kann, wobei sich das bewegliche Element (15) mit radialen Schaufeln wenigstens teilweise zwischen den beiden Enden des Heizrohrs (15) erstreckt.

2. Vorrichtung nach Anspruch 1, **dadurch gekennzeichnet, dass** die radialen Schaufeln (23) des beweglichen Elements (15) wenigstens teilweise axial gekrümmt sind.

3. Vorrichtung nach Anspruch 2, **dadurch gekennzeichnet, dass** die radialen Schaufeln (23) auf einem proximalen Abschnitt (61) des Fluideintrittsendes axial gekrümmt sind und auf dem Rest ihrer Länge geradlinig sind.

4. Vorrichtung nach Anspruch 3, **dadurch gekennzeichnet, dass** sich der proximale Abschnitt (61) ungefähr über ein Drittel der Länge des beweglichen Elements (15) mit radialen Schaufeln erstreckt.

5. Vorrichtung nach einem der Ansprüche 1 bis 4, **dadurch gekennzeichnet, dass** sie einen Kern (51) umfasst, der ein Lager für das bewegliche Element (15) mit radialen Schaufeln bildet.

6. Vorrichtung nach einem der Ansprüche 1 bis 4, **dadurch gekennzeichnet, dass** das bewegliche Element (15) mit radialen Schaufeln eine an den Enden spitzige Tragwelle (17) umfasst, wobei jedes Ende in einem zugeordneten Lager (21) gehalten wird und in einem Fluideintrittsgehäuse (9) bzw. in einem Fluidaustrittsgehäuse (10) angeordnet ist.

7. Vorrichtung nach einem der Ansprüche 1 bis 6, **dadurch gekennzeichnet, dass** das bewegliche Element (15) mit radialen Schaufeln außerdem auf Höhe des Fluideintrittsendes eine radiale Schürze (27) umfasst, um zu ermöglichen, dass das bewegliche Element (15) mit radialen Schaufeln im Betrieb angehoben wird, um die Reibungskräfte zu verringern.

8. Vorrichtung nach einem der Ansprüche 1 bis 7, **dadurch gekennzeichnet, dass** sie außerdem einen Elektromotor umfasst, der das bewegliche Element mit radialen Schaufeln antreiben kann.

9. Vorrichtung nach einem der Ansprüche 1 bis 7, **dadurch gekennzeichnet, dass** sie außerdem ein Fluideintrittsgehäuse (9) und ein Fluidaustrittsgehäuse (10) umfasst, wobei das Eintrittsgehäuse (9) wenigstens einen Fluideintrittskanal (35) aufweist, der mit dem Innenraum des Heizrohrs (13) kommuniziert, und dass der Fluideintrittskanal (35) wenigstens einen im Wesentlichen gekrümmten Abschnitt (37, 38) aufweist, derart, dass eine Verwirbelungsbewegung des Fluids erzeugt wird, die das bewegliche Element (15) mit radialen Schaufeln rotatorisch antreibt.

10. Heizkreis für den Fahrgastraum eines Fahrzeugs, **dadurch gekennzeichnet, dass** er eine Vorrichtung nach einem der vorhergehenden Ansprüche umfasst.

11. Heizungs- und/oder Klimatisierungsvorrichtung für ein Kraftfahrzeug, **dadurch gekennzeichnet, dass** es wenigstens eine Vorrichtung (1) zur thermischen Aufbereitung nach einem der vorhergehenden Ansprüche umfasst.

## Claims

1. Device (1) for the thermal conditioning of a fluid for a motor vehicle, comprising at least one thermal module (3) comprising a heating tube (13) inside which a fluid that is to be heated up or cooled down may flow from one end to the other end, **characterized in that** it comprises a mobile element with radial blades (15) able to be rotationally driven, the said mobile element with radial blades (15) extending at least partially between the two ends of the heating tube (15).

2. Device according to Claim 1, **characterized in that** the radial blades (23) of the mobile element (15) are at least partially axially curved.

3. Device according to Claim 2, **characterized in that** the radial blades (23) are axially curved over a proximal portion (61) of the fluid inlet end and straight over the remainder of their length.

4. Device according to Claim 3, **characterized in that** the said proximal portion (61) extends approximately over one third of the length of the mobile element with radial blades (15).

5. Device according to any one of Claims 1 to 4, **characterized in that** it comprises a core (51) acting as a bearing for the said mobile element with radial blades (15).

6. Device according to any one of Claims 1 to 4, **characterized in that** the mobile element with radial blades (15) comprises a support spindle (17), pointed at the ends, each end being held in an associated bearing (21) arranged respectively in a fluid inlet housing (9) and a fluid outlet housing (10).

7. Device according to any one of Claims 1 to 6, **characterized in that** the said mobile element with radial blades (15) further comprises, at the fluid inlet end, a radial skirt (27) to allow the mobile element with radial blades (15) to be lifted up during operation in order to reduce the friction forces.

8. Device according to any one of Claims 1 to 7, **characterized in that** it further comprises an electric motor capable of driving the said mobile element with radial blades.

9. Device according to any one of Claims 1 to 7, **characterized in that** it further comprises a fluid inlet housing (9) and a fluid outlet housing (10), the inlet housing (9) having at least one fluid inlet duct (35) communicating with the inside of the heating tube (13), and **in that** the fluid inlet duct (35) has at least one substantially curved portion (37, 38) configured to generate a swirling movement in the fluid to drive the said mobile element with radial blades (15) in rotation.

10. Circuit for heating the interior of a vehicle, **characterized in that** it comprises a device according to any one of the preceding claims.

11. Heating and/or air conditioning unit for a motor vehicle, **characterized in that** it comprises at least one thermal conditioning device (1) according to any one of the preceding claims.
